# EUROPEAN PATENT SPECIFICATION

(11) **EP 1 792 100 B1**
(45) Date of publication and mention of the grant of the patent: **20.06.2012**
(21) Application number: 04783654.9
(22) Date of filing: 09.09.2004
(51) Int. Cl.: F16H 25/22

(54) **ROLLER SCREW SYSTEM**
ROLLSPINDELSYSTEM
SYSTEME DE VIS A ROULEAUX

(43) Date of publication of application: 06.06.2007
(73) Proprietor: Lawlor, Shawn P., Bellevue WA 98005 (US); Cornelius, Charles C., Bellevue WA 98005 (US)
(72) Inventor: Lawlor, Shawn P., Bellevue WA 98005 (US); Cornelius, Charles C., Bellevue WA 98005 (US)
(74) Representative: Ascherl, Andreas
(86) International application number: PCT/US2004/029495
(87) International publication number: WO 2006/031217

(56) References cited:
- EP-A2- 0 275 504
- US-A- 3 182 522
- US-A- 3 595 094
- US-A- 3 744 332
- US-A- 3 884 090
- US-A- 4 033 194
- US-A- 4 050 319
- US-A- 4 375 770
- US-A- 4 375 770
- US-A- 4 884 466
- US-A- 5 809 837
- US-B1- 6 170 351

## Description

### TECHNICAL FIELD

The present invention relates generally to the field of devices used for converting rotary motion into linear motion, according to the preamble of independent claim 1 and as it is disclosed in document US 4.375.770

### BACKGROUND ART

US 4.375.770 discloses a roller screw system, comprising a cylindrical nut body with a center bore, the center bore having helical internal grooves, a shaft with external helical threads formed thereon, the shaft being disposed inside the center bore of the nut body, a plurality of rollers disposed inside the center bore and aligned radially around the shaft, each roller including a plurality of non-helical grooves formed thereon, capable of engaging the helical grooves on the nut body: and means for forcing the rollers outward.

The key functional element in all roller-screw systems, including the present system, is that the rotary motion of the shaft or roller-nut is converted into an axial force through the operation of the roller-nut on the shaft. The efficiency of that process is much greater than in the case of a conventional threaded shaft/nut system because of the inclusion of the rollers that are in rolling contact with both the shaft and the nut as opposed to sliding contact. Thus in the case of a properly operating roller-nut, axial force is created through machine elements that are in rolling contact with each other, as opposed to sliding contact in the case of a conventional nut/shaft system with a corresponding reduction in drag. This results in a significant increase in efficiency for a roller-screw system as compared to a conventional nut/shaft system.

In the present case, the high efficiency operation is achieved with elements that are less costly to manufacture and easier to assemble than in other high efficiency and roller-screw systems currently available.

### SUMMARY OF THE INVENTION

It is an object of the present invention to provide a more efficient roller screw system used to convert rotary motion into linear motion.

Disclosed herein is an improved roller screw system that uses a nut body which includes a plurality of longitudinally aligned rollers located between the interior grooved surface of the nut body and designed to remain in constant contact with the grooves located on the interior surface of the nut body during operation. The rollers, however, are able to shift axially and be re-positioned with respect to both the nut body and the shaft as the nut body or shaft are rotated while they remain constantly in rolling contact with the nut body.

The grooves on the nut body are helical over most of the inside surface of the nut body. Over a small region of the inside surface of the center bore, hereinafter referred to as the cross-over region, the grooves extend radially outward and axially. Located inside the nut body is a plurality of longitudinally aligned rollers. Formed over the outer surface of the rollers are non-helical grooves that mesh with a plurality of closed, partially helical grooves on the nut body and with the helical threads on the shaft that extends through the nut body. When the rollers travel through the cross-over region, two compression rings located on the opposite ends of the rollers force the rollers radially outward so that they maintain engagement with the grooves on the nut body. Because the grooves in the cross-over region extend axially, the rollers are shifted axially with respect to the nut body and shaft when centrally disposed in the cross-over region. As the rollers leave the cross-over region, they are extended axially and returned to the original starting point of the grooves on the nut body.

The grooves on the rollers are non-helical and designed to engage both the closed grooves on the nut body and on the open helical threads on the shaft. The diameter of the nut body, the shaft, and the rollers are sufficient in size so that when the grooves on the rollers engage the grooves on the nut body in the cross-over region, they progressively disengage from the helical threads on the shaft thereby enabling the rollers to move axially with respect to the nut body. As the rollers leave the cross-over region, they travel axially and re-engage the helical threads on the shaft. With each rotation of the nut body over the shaft, the rollers are in constant rolling contact with the grooves on the nut body.

There are two approaches for insuring that the rollers remain in full contact and engagement with the nut body grooves while they progress through the cross-over region of the nut grooves. In the first approach, compression rings are included at each end of the assembly that acts on the roller axles on each end of each roller. Because the compression rings are in rolling contact with the axles on the ends of the rollers and the rollers rotate along the grooves of the nut body and the threads of the shaft, the frictional forces between the nut body and shaft are substantially reduced.

In the second approach for insuring that the rollers remain in full contact and engagement with the grooves in the nut body as they progress through the cross-over region, a non-moving end-cover is attached over each end of the nut body that incorporates a lobed or cam shape that pushes radially outward on the axle included on each end of each of the rollers. In order to reduce the friction between the rotating axle and the non-rotating cam lobe, low friction bushings or roller bearings may be included with the roller axles.

### DESCRIPTION OF THE DRAWINGS

Fig. 1 is a perspective view of the first embodiment of the roller screw system disclosed herein.
Fig. 2 is an exploded, perspective view of the invention shown in Fig. 1.

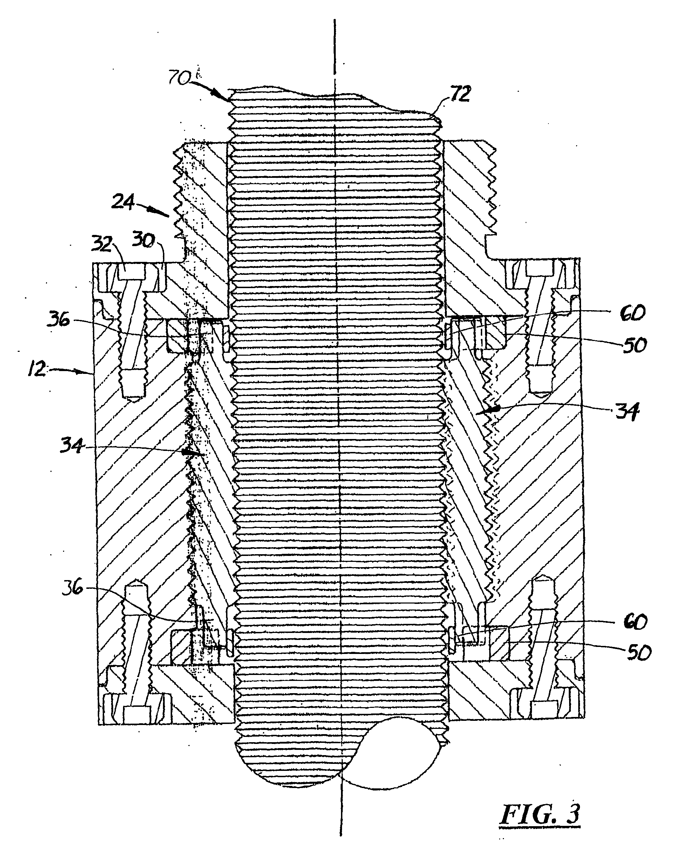

Fig. 3 is a sectional, side elevational view of the invention shown in Figs. 2 and 3.
Fig. 4 is a side elevational view of the grooves formed on the cross-over region of the nut body.
Fig. 5 is a top plan view of the nut body with the first end cap removed showing the relative location and movement of the rollers around the shaft and the relative location of the compression ring between the axles and the shaft.
Figs. 6A- 6K are illustrations showing the sequential movement of the nut body, a roller, and the shaft.
Fig. 7 is a top plan view of another embodiment of the system that uses six larger rollers disposed inside a modified nut body.
Fig. 8 is a perspective view of a cam ring.
Fig. 9 is a bottom plan view of the cam ring shown in Fig. 8.
Fig. 10 is a perspective view of the second embodiment of the system that uses two end covers that connect to external threads on the nut body.
Fig. 11 is a sectional side elevation view of a second embodiment shown in Fig. 10 showing two cam rings located on opposite ends of the rollers that are used in place of the two compression rings in the first embodiment shown in Figs. 1-3.
Fig. 12 is a partial, top plan view taken along line 12-12 in Fig. 11 showing the lobe region on one cam ring engaging a keyway formed on the nut body.
Fig. 13 is a sectional side elevation view of a third embodiment of the system showing anti-friction bushings disposed around the upper roller axles to minimize friction between rollers and the lobe region of the cam ring.
Fig. 14 is an exploded perspective view of a fourth embodiment of the invention that uses two pairs of slotted spacer rings to control circumferential spacing of the rollers inside the nut body and a compression ring located between the spacer rings on opposite axles that maintain proper orientation of the rollers inside the nut body.
Fig. 15 is a sectional side elevational view of a fourth embodiment shown in Fig. 14.

### DESCRIPTION OF THE PREFERRED EMBODIMENT(S)

Shown in the accompanying Figs., there is shown an improved roller screw system 10 that uses a nut body 12 which includes a plurality of rollers 34 located therein designed to remain in constant contact with the partially, helical, closed grooves 20 located on the interior surface of the nut body 12 and yet allow the rollers 34 to shift axially with respect to both the nut body 12 and the shaft 70 as the nut body 12 or shaft 70 are rotated. These grooves 20 on the nut body 12 maintain their purely helical trajectory over most of the circumference. Over a local circumferential region, hereinafter referred to as the cross-over region 40, the trajectory of the grooves 20 change to extend radially outward and axially to return to the original starting point, thus forming a closed groove. When the rollers 34 travel through the cross-over region 40, they move radially outward and shift axially with respect to both the nut body 12 and the shaft 70. When the rollers 34 leave the cross-over region 40, they are shifted axially and re-engage the starting point of helical region of the grooves 20. As the nut body 12 or shaft 70 rotates, the rollers 34 constantly remain in rolling contact and engagement with the nut body grooves 20.

When the rollers 34 engage the helical region of the grooves 20 on the nut body 12, they also completely engage in the helical threads 72 of the shaft 70. When the rollers 34 travel through the cross-over region 40, they progressively disengage from the threads 72 in the shaft 70 thereby enabling the cross-over region 40 to shift the rollers 34 axially. When the rollers 34 are completely disengaged from the threads 72 in the shaft 70, the grooves 42 in the cross-over region 40 shift the rollers 30 longitudinally so that roller 34 may re-engage the adjacent threads 72 on the shaft 70.

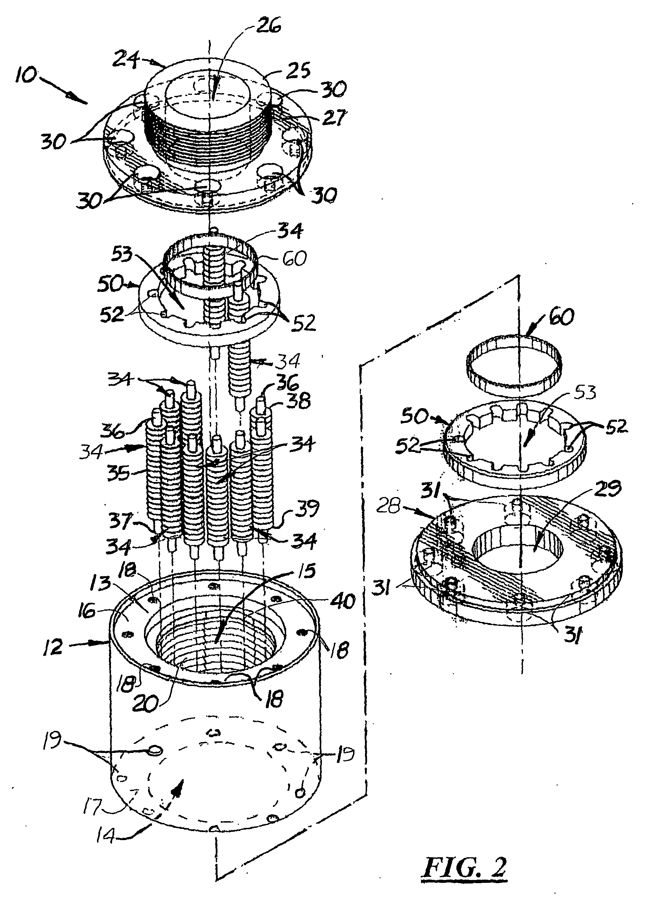

In the first embodiment shown in Fig. 2, the nut body 12 is cylindrical with top and bottom openings 13, 14 and a longitudinally aligned center bore 15. The length of the center bore 15 is less than the thickness of the nut body 12 thereby creating counter-sunk flange surfaces 16, 17 around the top and bottom openings 13, 14, respectively.

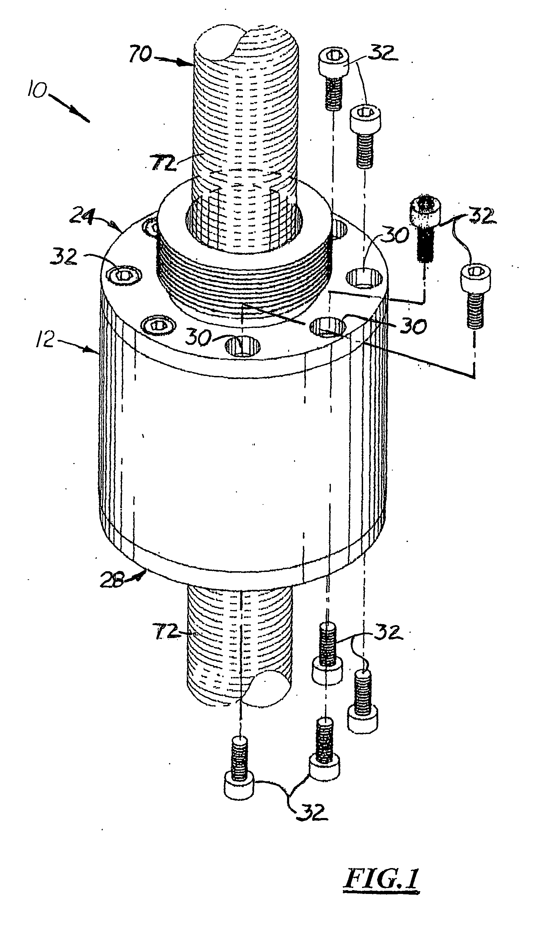

Selectively attached over the top and bottom openings 13, 14 is a removable top and bottom end cap 24, 28, respectively. The top end cap 24 includes a longitudinally aligned neck 25 with external threads 27 formed thereon. Both the top and bottom end caps 24, 28 include a non-threaded center bore 26, 29, respectively, designed to slide over the shaft 70 that connects to the nut body 12. A plurality of small bores 30, 31 are radially aligned around the perimeter edges of the end caps 24, 28, respectively, that receive threaded connectors 32 that extend into threaded bores 18, 19 formed on the flanges 16, 17, respectively, of the nut body 12. During assembly, the threaded connectors 32 (see Fig. 1) are used to selectively attach the top and bottom end caps 24, 28 to the nut body 12.

Located inside the nut body 12 is a plurality of longitudinally aligned rollers 34. Each roller 34 includes a plurality of non-helical grooves 35, two opposite axles 36, 37 and two opposite shoulders 38, 39. The rollers 34 may be of various lengths with various groove counts and shapes as dictated by load capacity requirements and manufacturing cost issues.

During use, the rollers 34 are radially aligned inside the center bore 15 of the nut body 12. In order to ensure that the rollers 34 do not become skewed or driven out of axial alignment between the nut body 12 and the shaft, a ring spacer 50 is provided. The ring spacer 50 is located under each end cap 24, 28 and over the shoulders 38, 39 of the rollers 34. The ring spacer 50 is used to keep the rollers 34 circumferentially spaced apart inside the center bore 15 of the nut body 12. The ring spacer 50 includes a center bore 53 and a plurality of semi-circular receiving elements 52 formed around its perimeter edge designed to receive an axle 36 or 37 on one roller 34. The axles 36, 37 on each roller 34 are sufficient in length to extend through the semi-circular receiving element 52 and terminate slightly above the ring spacer 50.

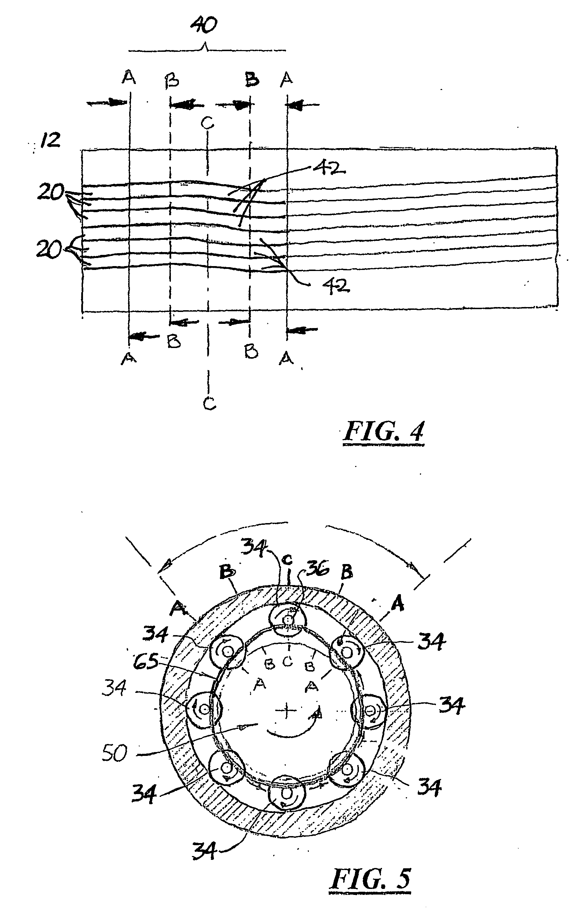

As shown in Figs. 4 and 5, the grooves 42 in the cross-over section 40 are sufficiently extended upward so that the grooves 35 in the rollers 34 return to their start position. As the shaft 70 rotates, the grooves 35 in the rollers 34 continuously engage the grooves 20 in the nut body 12. When the grooves 35 in the roller 34 travel in the cross-over region 40, they progressively disengage from the shaft 70. In the embodiment shown in Fig. 5, the cross-over section 40 is contained within approximately a 90 degree arc. It should be understood, however, that the cross-over sections used with different sized nut bodies may be contained in other fractions of 360 degrees, depending on various load capability and manufacturing cost requirements.

Also located inside the end caps 24, 28 and disposed inside the center bore 53 on the ring spacers 50 is a compression ring 60. During use, the compression ring 60 presses against the axles 36, 37 outward to provide a constant radially outward force on the ends of the rollers 34. This force maintains the grooves 35 in the rollers 34 in constant engagement with the grooves 20 in the nut body 12.

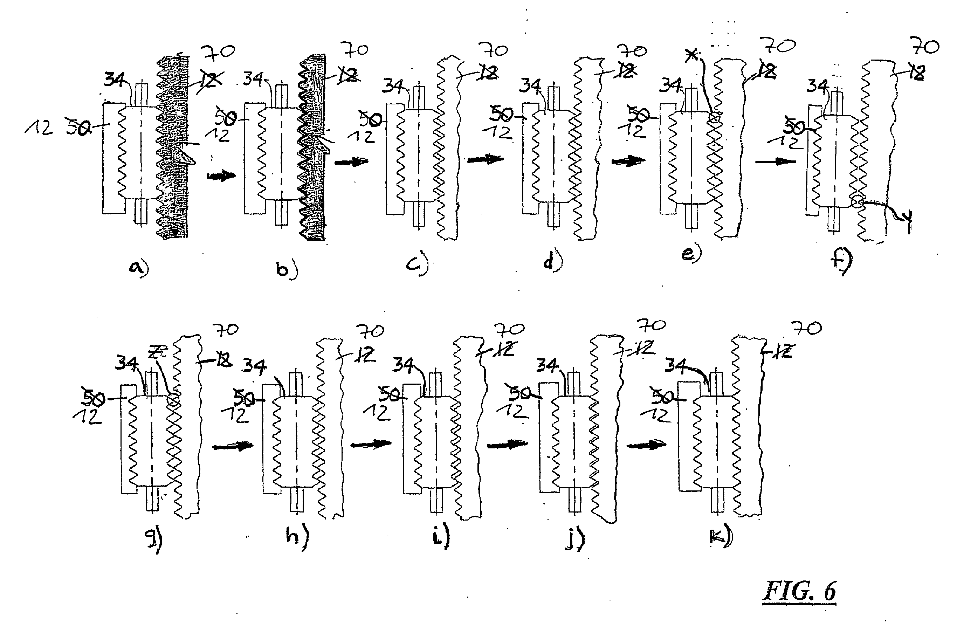

Figs. 6A-6F are illustrations that more clearly show the progressive disengagement and re-engagement of the grooves 20 in the nut body 12, the threads 72 on the shaft 70, and the grooves 35 on the rollers 34. Note that when the rollers 34 are in positions shown in Figs. 6E, F, and G (denoted points X, Y, and Z, respectively,) it is essential to ensure clearance between the rollers 34 and shaft 70 at the points of disengagement, cross-over region, and re-engagement. At these three points, X, Y, and Z, a free-body diagram analysis of the nut body 12, rollers 34 and shaft 70 reveals that, in the absence of any additional or external forces, there is no force causing the rollers 34 to maintain complete engagement in the nut body 12. Studies conducted by the inventor have shown that failure to maintain complete engagement in the nut body 12 may result in jamming and failed operation.

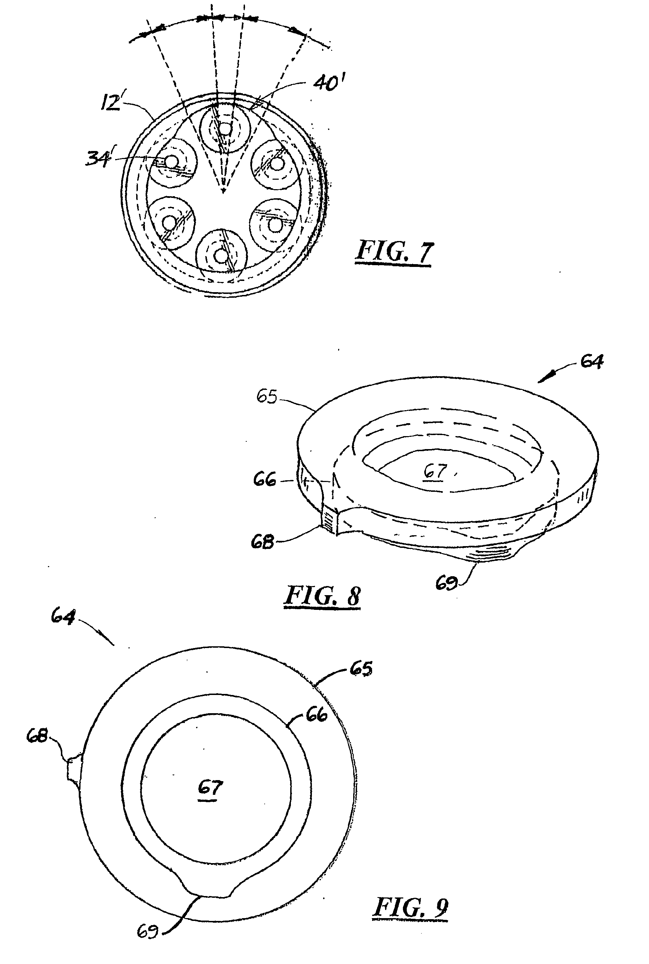

Shown in Fig. 7 is a nut body 12' space that includes six rollers 34' with larger diameters and shorter lengths than the rollers 34 shown in Fig. 2. Note that the cross-over region 40' space, formed in the grooves on the internal surface of the nut body 12', are modified to accommodate the larger diameter rollers 34'.

As mentioned above, one function of the two compression rings 60 is to force the opposite ends of the rollers 34 outward so that the grooves 35 continuously engage the grooves 20 on the nut body 12. During operation, however, it should be noted that the compression rings 60 also press tightly against the axles on the opposite ends of the rollers 34. When the shaft 70 is rotated, the compression rings 60 rotate on the roller axles 34 in the same direction as the shaft 70 while the rollers 34 rotate in the opposite direction. As a result, the compression ring 60 and the axles 36, 38 on the rollers 34 experience only rolling friction rather than sliding friction.

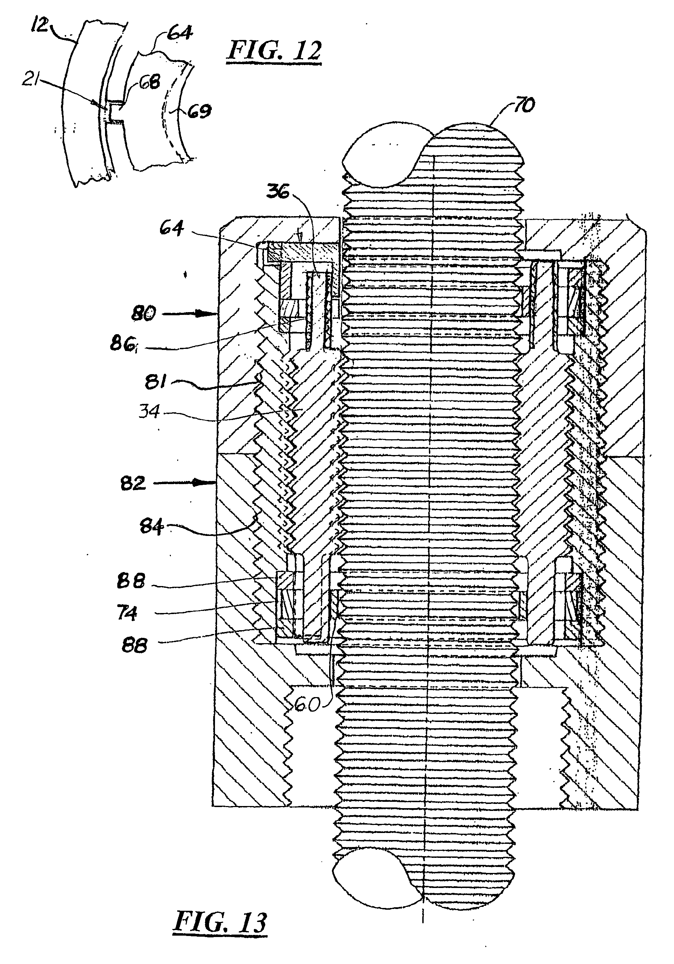

Another means to ensure the radial displacement of the rollers 34 is the use of a cam ring 64 as shown in Figs. 8 and 9. The cam ring 64 includes upper ring element 65 with a short cylindrical neck 66. Formed inside the cam ring 64 is a non-threaded bore 67 through which the shaft 70 extends. Formed on the outer surface of the upper ring element 15 is a key 68 designed to engage a keyway 21 formed on the inside surface of the nut body 12 shown more clearly in Fig. 12. When the key 68 engages the keyway 21, the cam ring 64 is locked in position inside the nut body 12.

Formed on the outer surface of the neck 66 is a lobe region 69 designed to press against the roller axle 36 when the roller 34 is progressing through the cross-over region 40. During assembly, the cam ring 64 is located over the ends of the axles 36 so that the lobe region 40 presses against the axles 36 towards the cross-over region 40 in the nut body 12'. During operation, the lobe region 69 forces the adjacent axle 36 outward to follow the grooves 20 in the cross-over region 40 to completely disengage the axle 36 from the shaft 70.

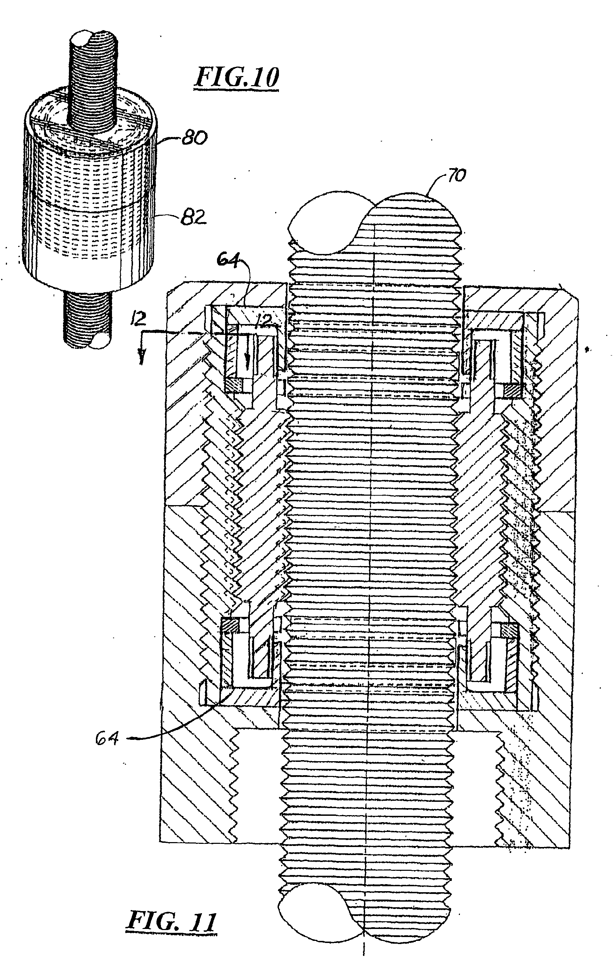

As shown in Figs. 11 and 13-15, the second embodiment of the nut body 12' with external threads 79 that connect to internal threads 81, 84 located inside two end covers 80, 82, respectively. Each end cover 80, 83 includes a center bore 82, 85, that enables the shaft 70 to extend through. During assembly, the end covers 80, 82 are tightened around the nut body 12' thereby retaining the various components therein.

Also as shown in Figs. 13-15, the system 10 includes two pairs of ring spacers 88, 88' located at opposite ends of the rollers 34' (lower ends shown only in Fig. 13) to provide sufficient outward force onto the rollers 34' and the compression rings 60. The advantage of using two ring spacers 88 and 88' is that they stabilize the rollers 34' to prevent racking or misalignment in the annular space formed between the shaft exterior surface and the interior surface of the nut body 12'. Additionally, when the compression ring 60 is confined between the two ring spacers 88, 88', it is prevented from moving upward and over the shoulder on the end of the rollers 34.

Also shown in Fig. 13, optional anti-friction bushings 86 may be disposed over the roller axles 36. During use, the anti-friction bushings 86 contact the cam ring 64 rather than the surface of the roller axle 36 thereby reducing friction between the roller axle 36 and the lobe region 69 on the cam ring 64.

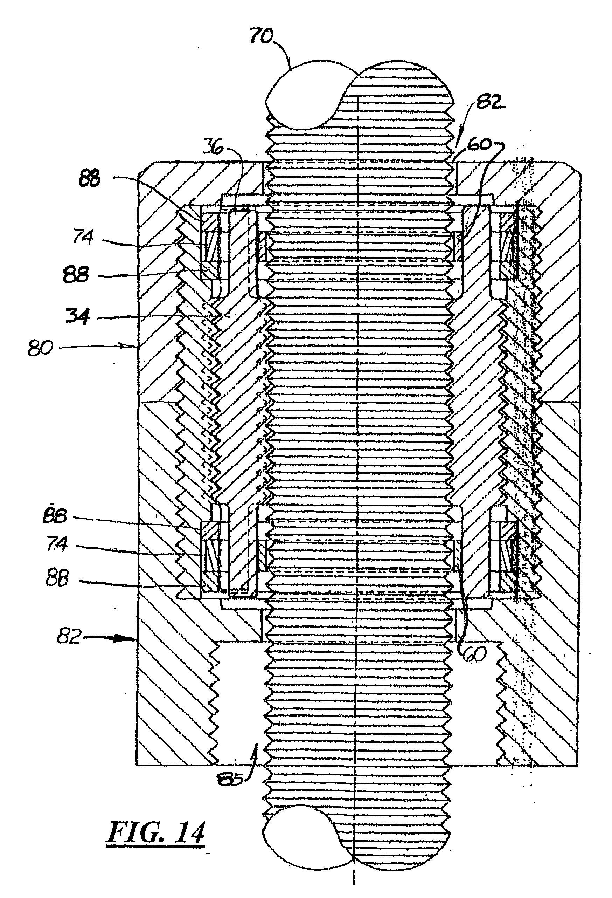

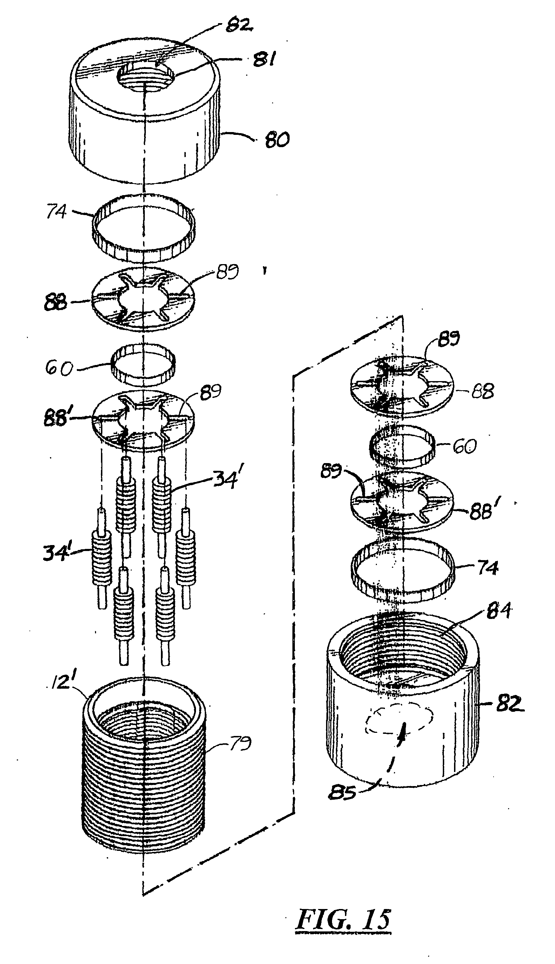

Figs. 14 and 15 disclose the use of one separator ring 74 sandwiched between two ring spacers 88, 88' and one compression ring 60 disposed over the ring spacer 88 or 88'. The 89, 89'slots formed in the ring spacer 88, 88', respectively, retain the axles 34 while the compression ring 60 forces the roller axles 36 outward.

### INDUSTRIAL APPLICABILITY

This invention is applicable in industries that used threaded connectors to connect components together. More particularly, this invention will be applicable to thread connectors that undergo high torque forces.

## Claims

1. A roller screw system, comprising:
a. a cylindrical nut body (12) with a center bore (15), said center bore (15) having helical internal grooves (20);
b. a shaft (70) with external helical threads (72) formed thereon, said shaft (70) being disposed inside said center bore (15) of said nut body (12);
c. a plurality of rollers (34) disposed inside said center bore (15) and aligned radially around said shaft (70), each said roller (34) including a plurality of non-helical grooves (35) formed thereon, capable of engaging said helical grooves (20) on said nut body (12); and,
d. means for forcing said rollers outward,
**characterized in that**
said center bore (15) has a circumferentially extending cross-over region (40) wherein said helical internal grooves (20) extend radially outward and extend axially, wherein said means for forcing said rollers outward are adapted to thereby engage said non-helical grooves (35) on said rollers (34) against said cross-over region (40) of said center bore (15) of said nut body (12).

2. The roller screw system, as recited in Claim 1, wherein said means for forcing said rollers outward includes at least one compression ring (60) located inside said nut body (12) and around said shaft (70), said compression ring (60) being located inside said rollers (34).

3. The roller screw system, as recited in Claim 2 wherein said means for forcing said rollers outward include two compression rings (60) located around said shaft (70) and inside said nut body (12); said compression rings (60) being located near the opposite ends of said rollers (34).

4. The roller screw system, as recited in Claim 2 or 3, each said roller further including two opposite axles (36, 37) upon which said at least one compression ring (60) acts against to force said roller (34) outward.

5. The roller screw system, as recited in Claim 4, further including at least one ring washer located inside said nut body (12) and disposed around said shaft (70), said ring washer including a plurality of radially aligned, semi-circular receiving elements (52) each capable of receiving one said axle (36, 37) on said roller (34), said semi-circular receiving elements (52) including an inside opening enabling said axle (36, 37) to be slidingly received to be radially aligned on said ring washer around said shaft (70).

6. The roller screw system, as recited in Claim 1 or 4, further including two removable end caps (24, 28) selectively attached to said nut body (12), wherein each said end caps (24, 28) includes a center bore (26, 29) through which said shaft (70) extends.

7. The roller screw system, as recited in Claim 1 or 4, further including exterior threads (79) formed on said nut body (12) and a pair of threaded end covers (80,82) that connect to said nut body (12) to retain said rollers (34) therein.

8. The roller screw system, as recited in Claim 1 or claim 4, wherein each said roller (34) includes two opposite axles (36, 37), and
wherein said means for forcing said rollers (34) outward to engage said cross-over region (40) on said nut body (12) includes a cam ring (64) located around said shaft (70) and said axles (36, 37) on said rollers (34), said cam ring (64) including means to couple said cam ring (64) to said nut body (12) to prevent rotation therein and a lobe region aligned on said cam ring (64) to force said roller (34) into contact with said cross-over region (34) as said nut body (12) and shaft 70) are rotated.

9. The roller screw system, as recited in Claim 4 or Claim 8, further including two ring spacers (50, 88, 88') located around said shaft (70) and said axles (36, 37), said ring spacers (50, 88, 88') being stacked above and below said compression ring (60) to confine said compression ring (60) on said rollers (34).

10. The roller screw system, as recited in Claim 8, further including a bushing (86) located around each said axle (36, 37) to reduce friction between said axle (36, 37) and said cam ring (64).

11. The roller screw system, as recited in Claim 9, further including a separator ring (74) disposed around said shaft (70) and between said ring spacers (50, 88, 88'), said separator ring (74) containing a plurality of slots each capable of receiving one said axle (36, 37) to retain said roller (34) inside said nut body (12).

## Patentansprüche

1. Rollengewindesystem, aufweisend:
a) einen zylindrischen Mutterkörper (12) mit einer Mittelbohrung (15), wobei die Mittelbohrung (15) helixförmige innere Rillen (20) aufweist;
b) eine Welle (70) mit daran ausgebildeten äußeren helixförmigen Gewindegängen (72), wobei die Welle (70) innerhalb der Mittelbohrung (15) des Mutterkörpers (12) angeordnet ist;
c) mehrere Rollen (34), die innerhalb der Mittelbohrung (15) angeordnet sind und radial um die Welle (70) ausgerichtet sind, wobei jede der Rollen (34) mehrere auf ihr ausgebildete nicht-helixförmigen Rillen (35) aufweist, die dazu fähig sind, mit den helixförmigen Rillen (20) auf dem Mutterkörper (12) in Eingriff zu kommen; und
d) Mittel zum Drücken der Rollen nach außen,
**dadurch gekennzeichnet, dass**
die Mittelbohrung (15) einen sich in Umfangsrichtung erstreckenden Übergangsbereich (40) hat, in dem die helixförmigen inneren Rillen (20) radial nach außen geweitet sind und sich axial erstrecken, wobei die Mittel zum Drücken der Rollen nach außen dazu angepasst sind, hierdurch die nicht-helixförmigen Rillen (35) auf den Rollen (34) gegen den Übergangsbereich (40) der Mittelbohrung (15) des Mutterkörpers (12) in Eingriff zu bringen.

2. Rollengewindesystem gemäß Anspruch 1, wobei die Mittel zum Drücken der Rollen nach außen mindestens einen Druckfederring (60) aufweisen, der innerhalb des Mutterkörpers (12) und um die Welle (70) herum angeordnet ist, wobei der Druckfederring (60) innerhalb der Rollen (34) angeordnet ist.

3. Rollengewindesystem gemäß Anspruch 2, wobei die Mittel zum Drücken der Rollen nach außen zwei Druckfederringe (60) aufweisen, die um die Welle (70) herum und innerhalb des Mutterkörpers (12) angeordnet sind; wobei die Druckfederringe (60) in der Nähe der entgegengesetzten Enden der Rollen (34) angeordnet sind.

4. Rollengewindesystem gemäß Anspruch 2 oder 3, wobei jede der Rollen ferner zwei entgegengesetzte Achsen (36, 37) aufweist, gegen die der mindestens eine Druckfederring (60) wirkt, um die Rolle (34) nach außen zu drücken.

5. Rollengewindesystem gemäß Anspruch 4, ferner aufweisend mindestens eine Ringscheibe, die innerhalb des Mutterkörpers (12) und um die Welle (70) herum angeordnet ist, wobei die Ringscheibe mehrere radial ausgerichtete, halbkreisförmige Aufnahmeelemente (52) aufweist, die jeweils dazu fähig sind, eine der Achsen (36, 37) auf der Rolle (34) aufzunehmen, wobei die halbkreisförmigen Aufnahmeelemente (52) eine Innenöffnung aufweisen, die es der Achse (36, 37) ermöglicht, verschiebbar aufgenommen zu werden, um auf der Ringscheibe um die Welle (70) herum radial ausgerichtet zu sein.

6. Rollengewindesystem gemäß Anspruch 1 oder 4, ferner mit zwei entfernbaren Endkappen (24, 28), die selektiv an dem Mutterkörper (12) angebracht sind, wobei jede der Endkappen (24, 28) eine Mittelbohrung (26, 29) aufweist, durch welche sich die Welle (70) erstreckt.

7. Rollengewindesystem gemäß Anspruch 1 oder 4, ferner aufweisend Außengewinde (79), die auf dem Mutterkörper (12) ausgebildet sind, und ein Paar mit Gewinde versehene Endabdeckungen (80, 82), die mit dem Mutterkörper (12) verbunden sind, um die Rollen (34) in diesem zu halten.

8. Rollengewindesystem gemäß Anspruch 1 oder Anspruch 4, wobei die Rollen (34) jeweils zwei entgegengesetzte Achsen (36, 37) aufweisen, und wobei die Mittel zum Drücken der Rollen (34) nach außen, um diese mit dem Übergangsbereich (40) an dem Mutterkörper (12) in Eingriff zu halten, einen Nockenring (64) beinhalten, der um die Welle (70) und die Achsen (36, 37) auf den Rollen (34) herum angeordnet ist, wobei der Nockenring (64) Mittel zum Koppeln des Nockenrings (64) mit dem Mutterkörper (12) aufweist, um eine Drehung in diesem zu verhindern, sowie einen Nockenbereich, der auf dem Nockenring (64) ausgerichtet ist, um die Rolle (34) in Kontakt mit dem Übergangsbereich (40) zu drücken, während der Mutterkörper (12) und die Welle (70) gedreht werden.

9. Rollengewindesystem gemäß Anspruch 4 oder Anspruch 8, ferner aufweisend Ringabstandhalter (50, 88, 88'), die um die Welle (70) und die Achsen (36, 37) herum angeordnet sind, wobei die Ringabstandhalter (50, 88, 88') ober- und unterhalb des Druckfederrings (60) in einer Stapelanordnung sind, um den Druckfederring (60) an den Rollen (34) einzuschließen.

10. Rollengewindesystem gemäß Anspruch 8, ferner aufweisend eine Buchse (86), die um jede der Achsen (36, 37) angeordnet ist, um die Reibung zwischen der jeweiligen Achse (36, 37) und dem Nockenring (64) zu verringern.

11. Rollengewindesystem gemäß Anspruch 9, ferner aufweisend einen Trennring (74), der um die Welle (70) herum und zwischen den Ring-Abstandhaltern (50, 88, 88') angeordnet ist, wobei der Trennring (74) mehrere Schlitze enthält, die jeweils dazu fähig sind, eine jeweilige Achse (36, 37) aufzunehmen, um die Rolle (34) innerhalb des Mutterkörpers (12) zu halten.

## Revendications

1. Système de vis à rouleaux comprenant :
a. un corps d'écrou cylindrique (12) avec un alésage central (15), ledit alésage central (15) ayant des rainures internes hélicoïdales (20) ;
b. un arbre (70) sur lequel sont formés des filets hélicoïdaux externes (72), ledit arbre (70) étant disposé à l'intérieur dudit alésage central (15) dudit corps d'écrou (12) ;
c. une pluralité de rouleaux (34) disposés à l'intérieur dudit alésage central (15) et alignés radialement autour dudit arbre (70), chacun desdits rouleaux (34) comprenant une pluralité de rainures non hélicoïdales (35) formées sur celui-ci, capables de venir en prise avec lesdites rainures hélicoïdales (20) sur ledit corps d'écrou (12) ; et
d. des moyens pour forcer lesdits rouleaux vers l'extérieur,
**caractérisé par le fait que**
ledit alésage central (15) a une région de croisement (40) s'étendant circonférentiellement, lesdites rainures internes hélicoïdales (20) s'étendant radialement vers l'extérieur et s'étendant axialement, lesdits moyens pour forcer lesdits rouleaux vers l'extérieur étant adaptés pour venir de cette façon en prise avec lesdites rainures non hélicoïdales (35) sur lesdits rouleaux (34) contre ladite région de croisement (40) dudit alésage central (15) dudit corps d'écrou (12).

2. Système de vis à rouleaux, selon la revendication 1, dans lequel ledit moyen pour forcer lesdits rouleaux vers l'extérieur comprend au moins une bague de compression (60) située à l'intérieur dudit corps d'écrou (12) et autour dudit arbre (70), ladite bague de compression (60) étant située à l'intérieur desdits rouleaux (34).

3. Système de vis à rouleaux, selon la revendication 2, dans lequel lesdits moyens pour forcer lesdits rouleaux vers l'extérieur comprennent deux bagues de compression (60) situées autour dudit arbre (70) et à l'intérieur dudit corps d'écrou (12), lesdites bagues de compression (60) étant situées près des extrémités opposées desdits rouleaux (34).

4. Système de vis à rouleaux, selon l'une des revendications 2 ou 3, chacun desdits rouleaux comprenant en outre deux axes opposés (36, 37) à l'encontre desquels ladite au moins une bague de compression (60) agit pour forcer ledit rouleau (34) vers l'extérieur.

5. Système de vis à rouleaux, selon la revendication 4, comprenant en outre au moins une rondelle annulaire située à l'intérieur dudit corps d'écrou (12) et disposée autour dudit arbre (70), ladite rondelle annulaire comprenant une pluralité d'éléments de réception (52) semi-circulaires, alignés radialement, chacun étant capable de recevoir un axe précité (36, 37) sur ledit rouleau (34), lesdits éléments de réception semi-circulaires (52) comprenant une ouverture intérieure permettant audit axe (36, 37) d'être reçu de façon coulissante pour être aligné radialement sur ladite rondelle annulaire autour dudit arbre (70).

6. Système de vis à rouleaux, selon l'une des revendications 1 ou 4, comprenant en outre deux capuchons d'extrémité amovibles (24, 28) attachés sélectivement audit corps d'écrou (12), chacun desdits capuchons d'extrémité (24, 28) comprenant un alésage central (26, 29) à travers lequel ledit arbre (70) s'étend.

7. Système de vis à rouleaux, selon l'une des revendications 1 ou 4, comprenant en outre des filets extérieurs (79) formés sur ledit corps d'écrou (12) et une paire de couvercles d'extrémité filetés (80, 82) qui se connectent audit corps d'écrou (12) pour y retenir lesdits rouleaux (34).

8. Système de vis à rouleaux, selon la revendication 1 ou la revendication 4, dans lequel chacun desdits rouleaux (34) comprend deux axes opposés (36, 37), et
dans lequel ledit moyen pour forcer lesdits rouleaux (34) vers l'extérieur pour venir en prise avec ladite région de croisement (40) sur ledit corps d'écrou (12) comprend un anneau de came (64) situé autour dudit arbre (70) et desdits axes (36, 37) sur lesdits rouleaux (34), ledit anneau de came (64) comprenant des moyens pour coupler ledit anneau de came (64) audit corps d'écrou (12) pour empêcher une rotation dans celui-ci et une région de lobe alignée sur ledit anneau de came (64) pour forcer ledit rouleau (34) en contact avec ladite région de croisement (34) alors que lesdits corps d'écrou (12) et arbre (70) tournent.

9. Système de vis à rouleaux, selon la revendication 4 ou la revendication 8, comprenant en outre deux espaceurs annulaires (50, 88, 88') situés autour dudit arbre (70) et desdits axes (36, 37), lesdits espaceurs annulaires (50, 88, 88') étant empilés au-dessus et au-dessous de ladite bague de compression (60) pour confiner ladite bague de compression (60) sur lesdits rouleaux (34).

10. Système de vis à rouleaux, selon la revendication 8, comprenant en outre une douille (86) située autour de chacun desdits axes (36, 37) pour réduire le frottement entre ledit axe (36, 37) et ledit anneau de came (64).

11. Système de vis à rouleaux, selon la revendication 9, comprenant en outre une bague de séparation (74) disposée autour dudit arbre (70) et entre lesdits espaceurs annulaires (50, 88, 88'), ladite bague de séparation (74) contenant une pluralité de fentes, chacune étant capable de recevoir l'un desdits axes (36, 37) pour retenir ledit rouleau (34) à l'intérieur dudit corps d'écrou (12).
